(19) Europäisches Patentamt
European Patent Office
Office européen des brevets

(11) EP 1 995 606 A1

(12) **EUROPEAN PATENT APPLICATION**

(43) Date of publication:
26.11.2008 Bulletin 2008/48

(51) Int Cl.:
*G01S 7/481* (2006.01)     *G01S 17/42* (2006.01)

(21) Application number: 08152393.8

(22) Date of filing: 06.03.2008

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **16.05.2007 JP 2007129981**

(71) Applicant: **OMRON Corporation, a corporation of Japan**
**Shiokoji-dori, Shimogyo-ku**
**Kyoto-shi**
**Kyoto 600-8530 (JP)**

(72) Inventors:
• **Shoji, Takashi**
**c/o Omron Corporation**
**Kyoto-shi**
**Kyoto 600-8530 (JP)**
• **Fujioka, Ryoji**
**c/o Omron Corporation**
**Kyoto-shi**
**Kyoto 600-8530 (JP)**

(74) Representative: **Wilhelms · Kilian & Partner**
**Patentanwälte**
**Eduard-Schmid-Strasse 2**
**81541 München (DE)**

(54) **Object detector**

(57)     An object detector projects laser light from a projecting part as detecting waves, moves the laser light horizontally and receives reflected waves of the laser light from an object to detect the position of the object from the elapsed time from when the laser light is projected until its reflection is received. A standard scan direction for a horizontal range of scan is set in a forward direction, and the vertical length irradiated by the laser light at positions where the distance from the projecting part is the same as the horizontal distance of the direction of projection of the detecting waves from the standard scan direction increases.

Fig. 1

**Description**

Background of the Invention

This invention relates to an object detector which uses electromagnetic waves such as laser light as detecting waves to detect the position of an object.

Radar devices that are mounted to an automobile and use electromagnetic waves such as laser light as detecting waves to detect the position of an object in front for the purpose of traffic safety have been known. Such a device is adapted to measure the length of time that it takes from the moment the detecting waves are transmitted until reflected waves are received and to obtain the distance to the object that reflected the detecting waves from the measured length of time. The direction to the object that reflected the detecting waves can also be obtained from the direction in which the detecting waves were transmitted at that moment. The radar device repeats this process of obtaining the distance and the direction of an object while varying the horizontal direction of detecting waves within a predetermined range of detection and obtains the relative position of each object inside this range of detection. The radar detector also detects the changes in the distance and the direction of each detected object with the change in time. It can determine whether the object is stationary or moving by calculating the speed of motion of the object by using the speed and the direction of motion of the vehicle to which it is mounted (hereinafter referred to as the own vehicle). A traffic control is carried out on the side of the vehicle if it is determined from the result of detection by the radar device that the detected object is a vehicle traveling in front of the own vehicle.

Japanese Patent Publication Tokkai 2000-75030 has disclosed a radar device adapted to adjust the horizontal scan angle and the spread of the laser light to be used as detecting waves according to the speed of travel of the own vehicle. Since the energy of reflected waves received by a radar device becomes smaller as the distance to the target object of detection increases, the spread of the detecting waves must be reduced to make the beam narrow in order to increase the distance to a detectable object, as explained in Japanese Patent Publication Tokkai 11-72554. When an object at a short distance is being detected, however, it is desirable to increase the spread and to widen the beam in order to prevent the failure of the detecting waves to fall upon the target object to be detected. Japanese Patent Publication Tokkai 2000-75030 is proposing to increase the horizontal scan angle and the spread of the laser light on the following two ideas, as the speed of the own vehicle is reduced:

(a) It is preferable from the point of view of traffic safety to quickly detect an object in front when the own vehicle is traveling fast although the ability to detect objects diagonally in front may be adversely affected; and

(b) It is preferable from the point of view of traffic safety to improve the ability to detect objects diagonally in front when the own vehicle is traveling relatively slow rather than the ability to detect an object in front quickly.

A radar device with two axes adapted to move the detecting waves both in horizontal and vertical directions has also been proposed, say, in Japanese Patent Publication Tokkai 2004-125739.

The purpose of mounting a radar device to a vehicle is to improve traffic safety. Thus, it is not desirable to adversely affect its ability to detect objects diagonally in front when the own vehicle is traveling fast or the ability to quickly detect an object in front when the own vehicle is traveling relatively slowly. In other words, it is important to reduce the negative effects on the ability to detect independent of the speed of travel of the own vehicle.

Summary of the Invention

It is therefore an object of this invention to provide an object detector capable of maintaining its detection ability both for objects in front and objects diagonally in front.

An object detector according to this invention is structured as follows in view of this object of the invention.

A projecting part projects electromagnetic waves such as laser light as detecting waves. A scanning part moves the detecting waves projected by the projecting part in the horizontal direction. A receiving part receives reflected waves of the detecting waves reflected from an object. The position of this object is detected by a position detecting part from elapsed time from when the detecting waves were projected until the reflected waves were received and the direction of projection determined by the scanning part.

The direction with a maximum detectable distance for objects is defined as the standard scan direction and may be selected as the forward direction. If the main body of the object detector is mounted to a vehicle and the standard scan direction is to be set according to the shape of the road on which the vehicle is traveling, a device for obtaining the shape of the road being traveled upon is provided. The horizontal standard scan direction for the detecting waves is set by a setting means.

An adjusting means increases the vertical length irradiated by the detecting waves at positions where the distance from the projecting part is the same as the horizontal distance of the direction of projection of the detecting waves from the standard scan direction increases. In other words, the distance over which the vertical length irradiated by the detecting waves is made shorter as the horizontal distance of the direction of projection of the detecting waves from the standard scan direction increases. This may be done by making the scanning part capable of moving the detecting waves vertically and increasing the vertical range of moving the detecting waves as the horizontal distance of the direction of projection of the detecting waves from the standard scan direction increases. This may also be done by making the angle of vertical spread of the detecting waves as the horizontal distance of the direction of projection of the detecting waves from the standard scan direction. A structure combining these methods may be used.

According to this invention, therefore, the detectable distance of objects in the standard scan direction can be secured and the ability to detect objects away from the standard scan direction can also be secured.

Brief Description of the Drawings

Fig. 1 is a block diagram of a radar device according to this invention.
Figs. 2A and 2B, together referred to as Fig. 2, are drawings for explaining the mechanism for moving the laser light.
Figs. 3, 4 and 5 are drawings for explaining the process for detecting an object by the radar device.
Fig. 6 is a view taken forward from a vehicle traveling on a straight one-way street with a single lane.
Figs. 7A, 7B and 7C, together referred to as Fig. 7, and Figs. 8 - 10 are drawings for explaining the scan range of the laser light in the vertical direction within a range where the presence of an object is to be detected.
Fig. 11 is a drawing for showing the detection area for objects in the horizontal direction.
Fig. 12 is a drawing for showing the standard scan direction of a vehicle traveling on a curved road.
Figs. 13A and 13B, together referred to as Fig. 13, Figs. 14A and 14B, together referred to as Fig. 14, and Figs. 15A and 15B, together referred to as Fig. 15, are drawings for explaining structures for changing the spread angle of laser light in the horizontal direction by means of the light projecting lens.
Fig. 16 is a block diagram of another radar device according to this invention.
Fig. 17 is a drawing for explaining a structure for using electro-optical elements to carry out a scan by laser light.
Figs. 18A, 18B, 18C and 18D, together referred to as Fig. 18, are drawings for explaining another structure for using an electro-optical element to carry out a scan by laser light.
Fig. 19 is a drawing for explaining still another structure for using an electro-optical element to carry out a scan by laser light.
Figs. 20A, 20B and 20C, together referred to as Fig. 20, are drawings for explaining still another structure for using electro-optical elements to carry out a scan by laser light.

Detailed Description of the Invention

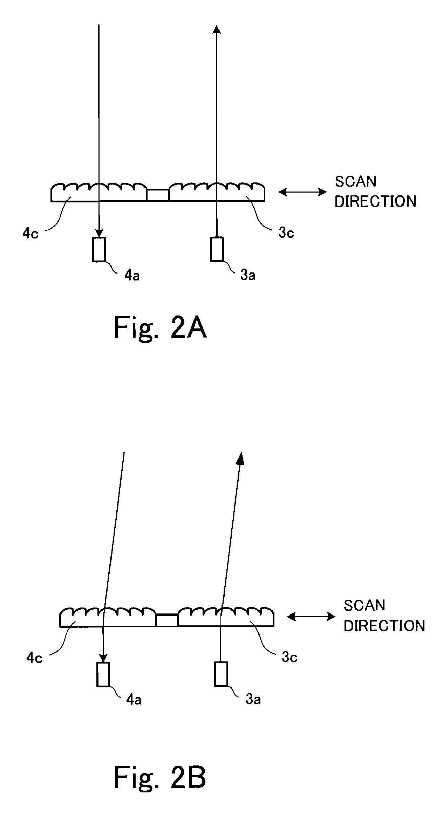

The invention is described next by way of embodiments.

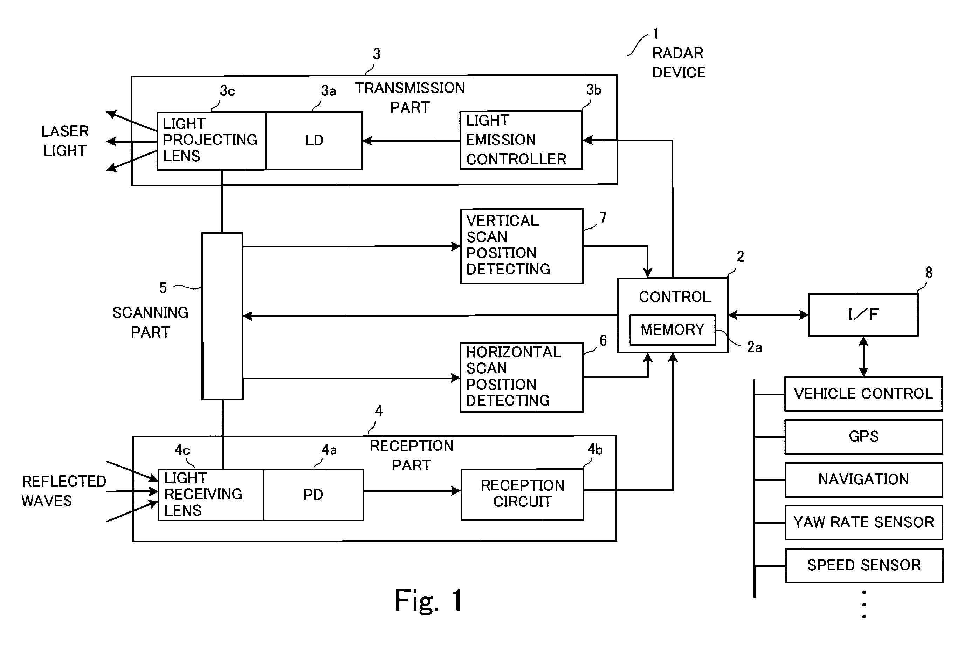

Fig. 1 shows the structure of the main parts of a radar device 1 according to this invention, provided with a control part 2, a transmission part 3, a reception part 4, a scanning part 5, a horizontal scan position detecting part 6, a vertical scan position detecting part 7 and an external interface (I/F) 8. This radar device 1 is adapted to be mounted to a mobile vehicle and its control part 2 is for controlling the operations of each component of the main body, having a memory 2a for storing programs for carrying out the object detecting process to be described in detail below and parameters to be used at the time of its operation. The transmission part 3 includes a laser diode (LD) 3a which is a light emitting element, a light emission controller 3b for controlling the light emission by the laser diode 3a, and a light projecting lens 3c disposed opposite the light emitting surface of the laser diode 3a. The reception part 4 includes a photodiode (PD) 4a which is a light receiving element, a reception circuit 4b for processing the output signals of the photodiode 4a, and a light receiving lens 4c disposed opposite the light receiving surface of the photodiode 4a.
The scanning part 5 serves to shift the light projecting lens 3a horizontally and vertically with respect to the light emitting surface of the laser diode 3a. The direction of the laser light emitted from the laser diode 3a changes horizontally according to the horizontal shift of the light projecting lens 3c and vertically according to the vertical shift of the light projecting lens 3c. In other words, the horizontal scan by the laser light from the laser diode 3a is carried out by the horizontal motion of the light projecting lens 3c. Similarly, the vertical scan by the laser light from the laser diode 3 a is carried out by the vertical motion of the light projecting lens 3c. Since the light receiving lens 4c is connected to the light projecting lens 3c, as shown in Fig. 2, the light receiving lens 4c moves horizontally and vertically with respect to the light receiving surface of the photodiode 4a in synchronism with the movement of the light projecting lens 3c. Thus, the reflected light of the laser light emitted from the laser diode 3 a and reflected from an object can be collected on the light receiving surface of the photodiode 4a. As shown in Fig. 2, as the light projecting lens 3c is moved to the right, the direction of laser light emitted from the laser diode 3a tilts to the right-hand direction and as the light projecting lens 3c is moved to the left, the direction of laser light emitted from the laser diode 3a tilts to the left-hand direction. Fig. 2A shows a situation where the laser light is emitted approximately in the forward direction. Fig. 2B shows another situation where the direction of emission of the laser light has tilted somewhat to the right-hand direction.

The scanning part 5 is adapted not only to move the light projecting lens 3c and the light receiving lens 4c as described above and as shown in Fig. 2 but also to move them in the direction perpendicular to the sheet of Fig. 2. Although so-called Fresnel lenses are shown in Fig. 2, lenses with a uniform curvature may be used as long as a sufficient scan range can be obtained.

The horizontal scan position detecting part 6 obtains from the scanning part 5 the horizontal position of the light projecting lens 3c and transmits it to the control part 2. The vertical scan position detecting part 7 obtains from the scanning part 5 the vertical position of the light projecting lens 3c and transmits it to the control part 2. The control part 2 calculates the horizontal direction of emission of the laser light from the laser diode 3a based on the horizontal position of the light projecting lens 3c obtained from the horizontal scan position detecting part 6. The control part 2 calculates the vertical direction of emission of the laser light from the laser diode 3a based on the vertical position of the light projecting lens 3c obtained from the vertical scan position detecting part 7.

The external interface (I/F) 8 controls inputs and outputs with the control unit on the side of the vehicle to which the radar device is mounted (hereinafter referred to as the vehicle control unit). A GPS device, a navigation device, a yaw rate sensor, a vehicle speed sensor, etc. are connected to the vehicle control unit. The radar device 1 reports the position of the detected object, etc. to the vehicle control unit through this external interface 8. The radar device 1 also receives information such as the position of the vehicle, map data, the angular speed of the vehicle, and the traveling speed of the vehicle from the vehicle control unit through the external interface 8. For example, the radar device 1 receives the position of the vehicle and the road condition in front from the GPS device and the navigation device and detects the map position of any object from the relative positional relationship between the vehicle and the detected object. Thus, the radar device 1 can also judge whether or not the detected object is on the road being traveled by the vehicle. It is also possible to obtain the radius of curvature of the current travel route of the vehicle from the angular speed of the vehicle obtained from the yaw rate sensor and the traveling speed of the vehicle obtained from the vehicle speed sensor by using the formula:

$$\text{(radius of curvature)} = \text{(travel speed)}/ \text{(angular speed)}.$$

Thus, the radar device 1 can also determine whether the detected object is on the current travel route of vehicle on the road being traveled upon. The yaw rate sensor may be provided on the side of the radar device 1.

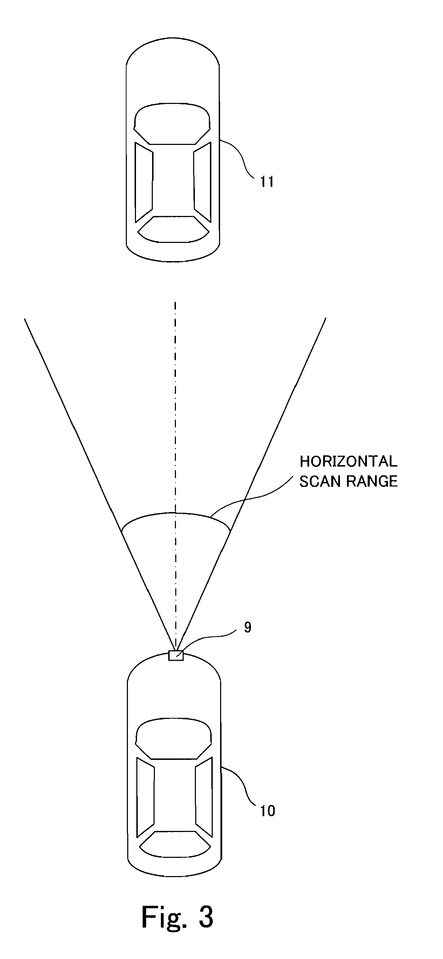

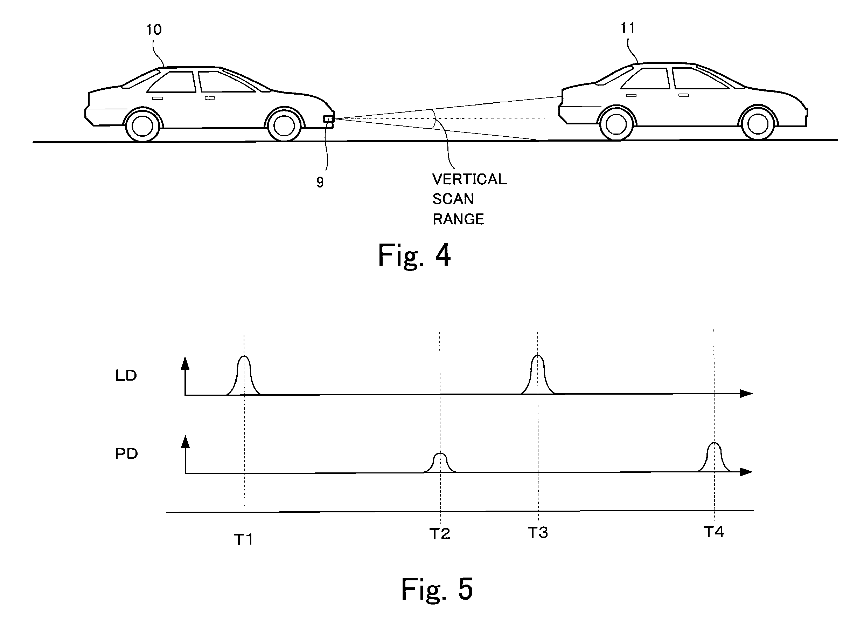

Next, the process of detecting objects by the radar device 1 is explained briefly. The memory 2a stores a program for carrying out this detection process, and information such as the travel speed of the vehicle is inputted from the side of the vehicle to the control part 2 through the external interface 8. Figs. 3 and 4 are drawings for explaining this process. A detector head incorporating the laser diode 3a, the light projecting lens 3c, the photodiode 4a, the light receiving lens 4c and the scanning part 5 is affixed to a front surface part of the own vehicle 10. Numeral 11 indicates another vehicle (hereinafter referred to as the front-going vehicle) traveling in front of the own vehicle 10. Within a horizontal scan range shown in Fig. 3, the radar device 1 moves the laser light emitted from the laser diode 3a horizontally. Explained more in detail, this is done by the scanning part 5 causing the light projecting lens 3c horizontally. This horizontal scan range determines the range of detection for objects. The radar device 1 also moves the laser light emitted from the laser diode 3a vertically within a vertical scan range shown in Fig. 4. The control part 2 detects the horizontal and vertical directions of the laser light emitted from the laser diode 3 a based on the horizontal and vertical positions of the light projecting lens 3c inputted from the horizontal scan position detecting part 6 and the vertical scan position detecting part 7.

The scanning part 5 also moves the light receiving lens 4c in synchronism with the light projecting lens 3c and collects the reflected light from an object on the light receiving surface of the photodiode 4a. The light emission controller 3b controls the laser diode 3 a according to a command from the control part 2 so as to transmit laser light at predetermined time intervals, as shown in Fig. 5. The reception circuit 4b processes the output signals from the photodiode 4a such that an electric signal corresponding to the level of the quantity of received light by the photodiode 4a is inputted to the control part 2. The quantity of light received by the photodiode 4a increases when the reflected light of the laser light from the laser diode 3a is received, as shown in Fig. 5.

The control part 2 calculates the distance L to the object that reflected the laser light emitted from the laser diode 3a from the length of time from the initial time T1 (or T3) when the laser diode 3a emitted light and the final time T2 (or T4) when the photodiode 4a received the reflected light of the laser light emitted from the laser diode 3 a. The distance L can be calculated as $L = c(T2 - T1)/2$ where c is the speed of laser light propagation. The control part 2 also obtains the direction of the object with respect to the own vehicle 10 by using the horizontal and vertical directions of the emitted laser light obtained from the horizontal scan position detecting part 6 and the vertical scan position detecting part 7. On the basis of the distance and direction of the object, the relative position of the object with respect to the own vehicle 10 is obtained. The position of each object that is detected is communicated to the vehicle control unit through the external interface 8.

The vehicle control unit carries out the traffic control by following the front going vehicle 11 based on the communication from the radar device 1.

The process for detecting objects by the radar device 1 is explained next more in detail.

In order to provide sufficient assistance to the traffic safety of the own vehicle 10, the radar device 1 determines a direction in which the presence of an object is desired to be detected quickly. This direction will be hereinafter referred to as the standard scan direction. When the own vehicle 1 is traveling on a straight road, for example, the frontal direction is the standard scan direction since it is important to detect the presence of a front going vehicle as quickly as possible.

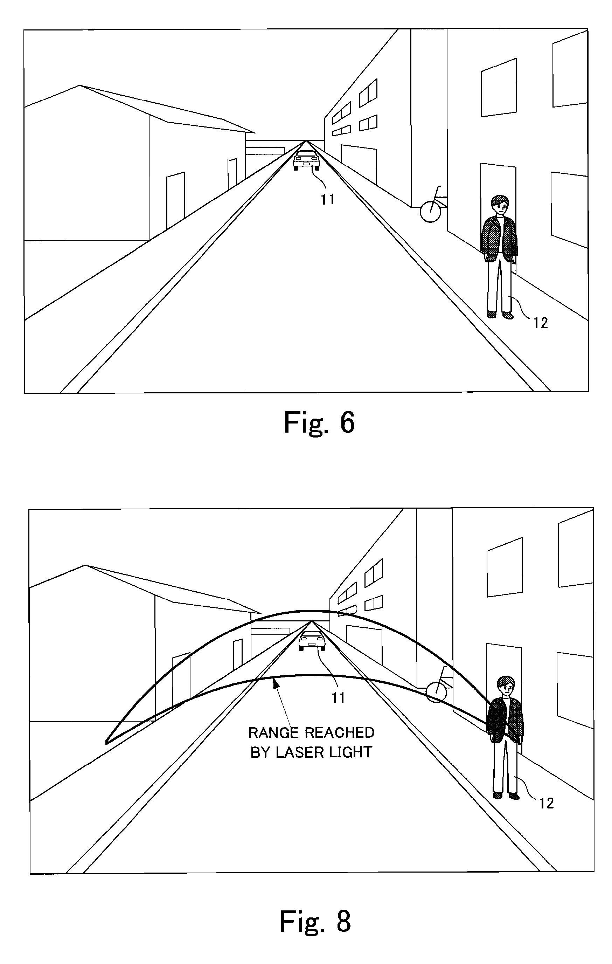

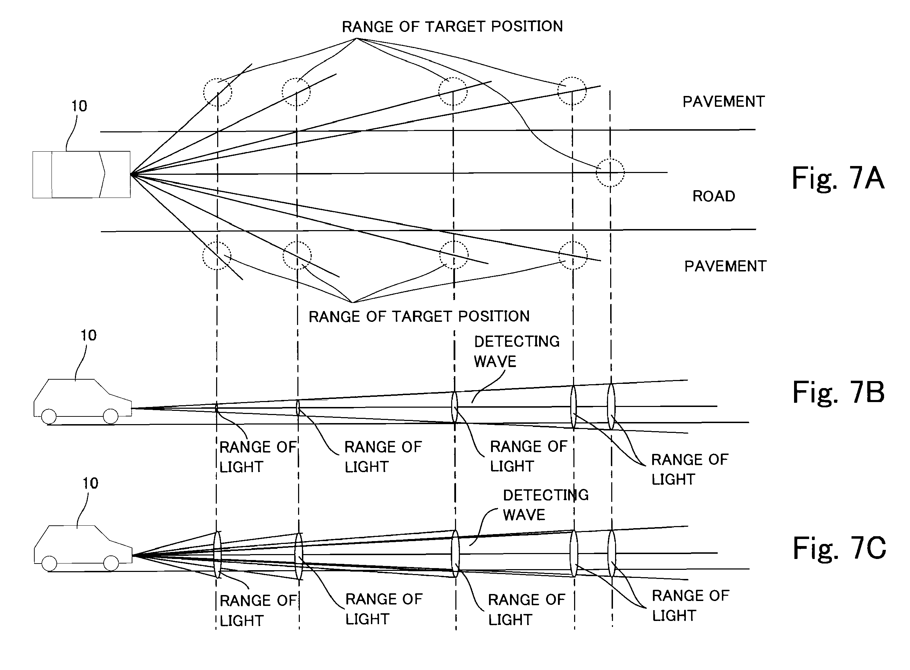

Fig. 6 is a view taken forward from a vehicle traveling on a straight one-way street with a single lane. Since the laser light emitted from the laser diode 3 a expands in proportion to the distance, the angle of its spread must be limited in order to maintain the energy density high such that the front going vehicle 11 can be kept within the detectable distance. On the other hand, as the spread angle of the laser light increases in the horizontal direction (or as the direction for detecting a pedestrian 12 moves away horizontally from the frontal direction), the range for the pedestrian 12 or objects to be detected moves from the road to the pavement and comes closer to the own vehicle 10, as shown in Fig. 7A. In other words, as the scanning angle of the laser light becomes large in the horizontal direction, the distance between the pedestrian 12 or an object to be detected and the own vehicle 10 becomes substantially shorter. Since the laser light spreads as the distance increases, as explained above, if the laser light is moved horizontally in a scanning motion while its spread is limited, the laser beam becomes too small in the vertical direction at the position of the pedestrian 12 on the pavement near the own vehicle 10, as shown in Figs. 7B and 8. Thus, at such position corresponding to the pedestrian 12 on the pavement near the own vehicle, the laser light may fail to fall upon the pedestrian 12 or even if the laser light falls upon the pedestrian 12, the reflectivity is very low at such a position or the reflected waves may fail to return to the radar device 1 although the reflectivity may not be too low. In other words, the ability to detect such a pedestrian 12 may be significantly lowered.

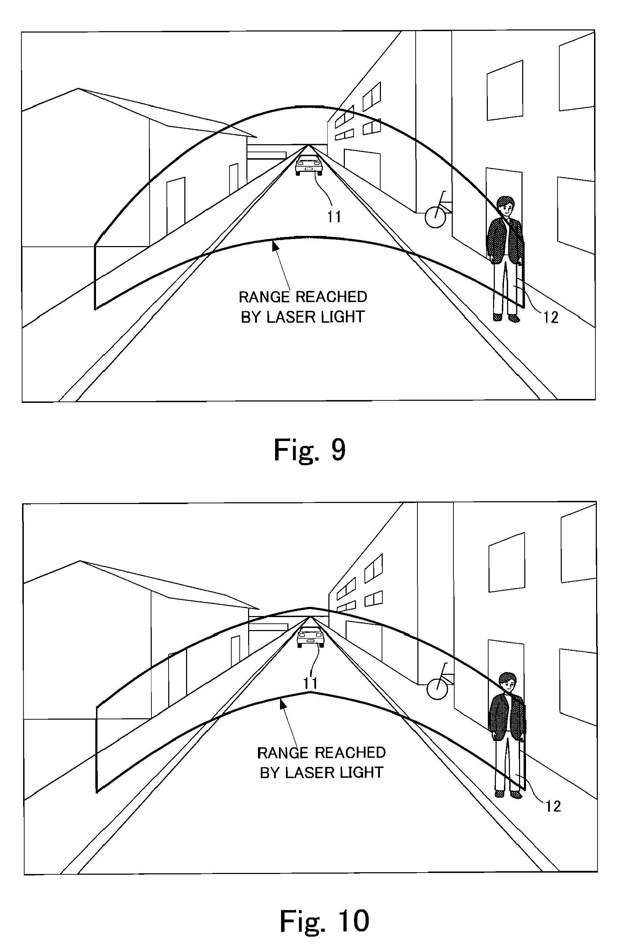

Although it is possible, as shown in Fig. 9, to enlarge the spread angle of the laser light such that the diameter of the beam of the laser light in the vertical direction becomes larger at the position of the pedestrian 12 on the pavement near the own vehicle 10, the detectable distance in the standard scan direction becomes shorter, and it becomes not possible to quickly detect an object in the standard scan direction. For this radar device 1, as shown in Fig. 7C, the vertical range of the laser light is approximately the same within the range where the distance to the own vehicle 10 becomes shorter and the pedestrian 12 and objects to be detected exist.

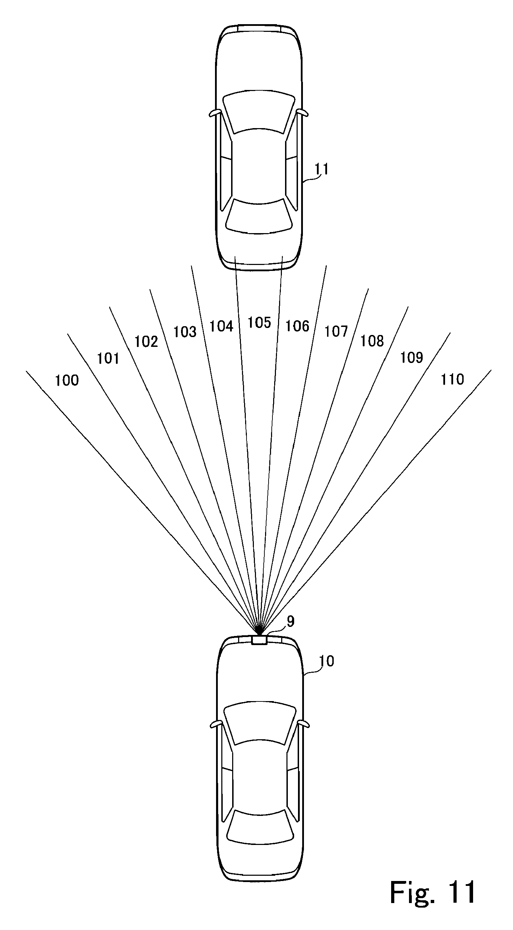

This radar device 1 is adapted to carry out a detection process while maintaining the detectable distance in the standard scan direction and also maintaining the ability of detection even for objects that are relatively close at positions farther separated from the standard scan direction. Explained more in detail, the vertical range of the laser light irradiation is made approximately equal for each scan angle in the horizontal direction within the range of distance of objects to be detected, as shown in Fig. 10. In the example of Fig. 11, the detection range is divided into eleven partitions 100-110, and the vertical scan range is changed for each of these partitions according to the range of distance to the target object to be detected. In the example of Fig. 11, the standard scan direction is determined to be the direction of the partition 105, and the vertical scan range of the laser light is made larger as the partition is farther away from the standard scan direction. Let $\theta 1$ be the vertical scan range for the detection partition 105, $\theta 2$ be that for the detection partitions 104 and 106, $\theta 3$ be that of the detection partitions 103 and 107, $\theta 4$ be that of the detection partitions 102 and 108, $\theta 5$ be that of the detection partitions 101 and 109 and $\theta 6$ be that of the detection partitions 100 and 110 such that $\theta 1 < \theta 2 < \theta 3 < \theta 4 < \theta S < \theta 6$. Angles $\theta 1 - \theta 6$ are set further such that the vertical length where the laser light is irradiated will be about the same in each of the partitions 100-110 within the range of the distance of the objects to be detected.

Thus, the radar device 1 can not only maintain the detectable distance for objects that exist in the standard scan direction but also maintain the ability to detect objects that are at positions diagonally in front away from the standard scan direction. In other words, it can sufficiently contribute to the traffic safety of the own vehicle 10 to which it is mounted.

As an alternative example, angles $\theta 1 - \theta 6$ may be set such that the vertical length where the laser light is irradiated will increase as the separation from the standard scan direction increases. As another example, the vertical scan ranges may not be asymmetric with respect to the standard scan direction. If the left-hand side of the own vehicle is a pavement and the right-hand side is a traffic lane for the opposite direction, for example, the angle of spread in the vertical direction may be increased gradually on the left-hand side of the standard scan direction such that the detection ability for short distances will be improved while the angle of spread in the vertical direction is not increased on the right-hand side of the standard scan direction such that vehicles moving in the opposite direction can be detected quickly. The road condition such as the number of traffic lanes can be obtained through the external interface 8 from the GPS device and the navigation device.

In order to control the reflections from the road surface, it is preferable to reduce the amount by which the scan range in the vertical direction is made wider in the downward direction and to increase the amount by which the scan range in the vertical direction is made wider in the upward direction with respect to the direction of emission of the laser light in the vertical direction in the standard scan direction. An upper limit for the scan range in the vertical direction may be set. For example, the upper limit may be set equal to θ4 such that angles θ1 - θ6 are θ1 < θ2 < θ3 < θ4 = θ5 = θ6.

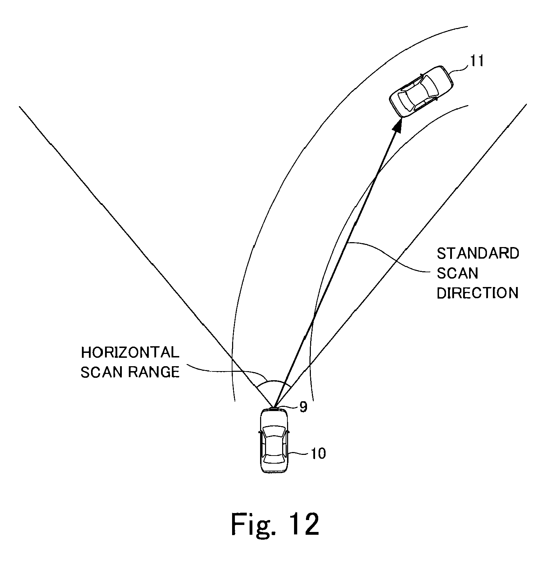

Although an example was explained above in which the frontal direction is defined as the standard scan direction in the horizontal direction, the standard scan direction may be selected according to the travel condition of the own vehicle or the road condition where the own vehicle is traveling. When the own vehicle 10 having the radar device 1 mounted thereto and the detection head 9 attached to its front surface is traveling on a curved road, as shown in Fig. 12, for example, the direction of the detected front going vehicle may be selected as the standard scan direction and the vertical scan range may be made larger as one moves farther away from this standard scan direction.

The radar device 1 is capable of obtaining the position of the own vehicle and the shape of the road ahead from the GPS device and the navigation device through the external interface 8. Similarly, the shape of the road currently being traveled can be obtained by using the yaw rate sensor. The standard scan direction may be determined according to the road condition thus obtained and objects may be detected.

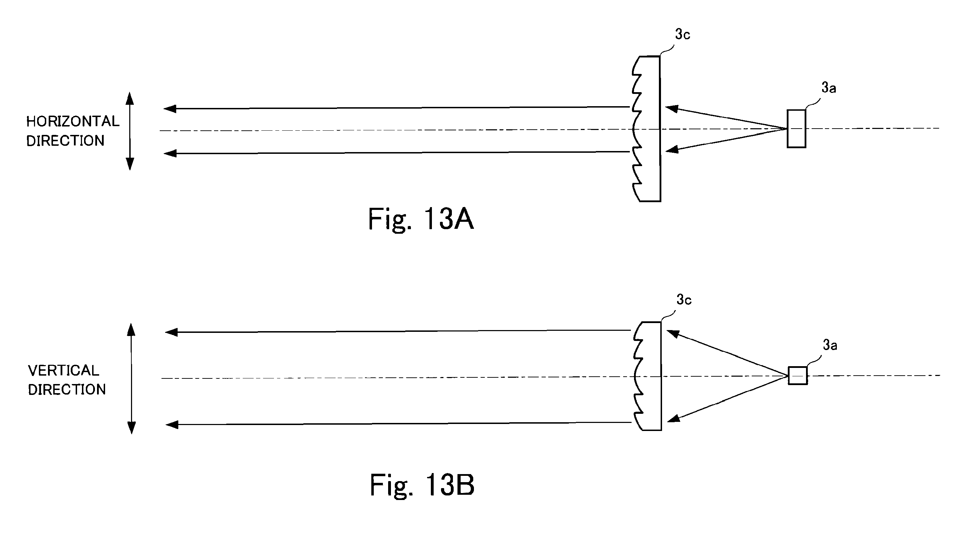

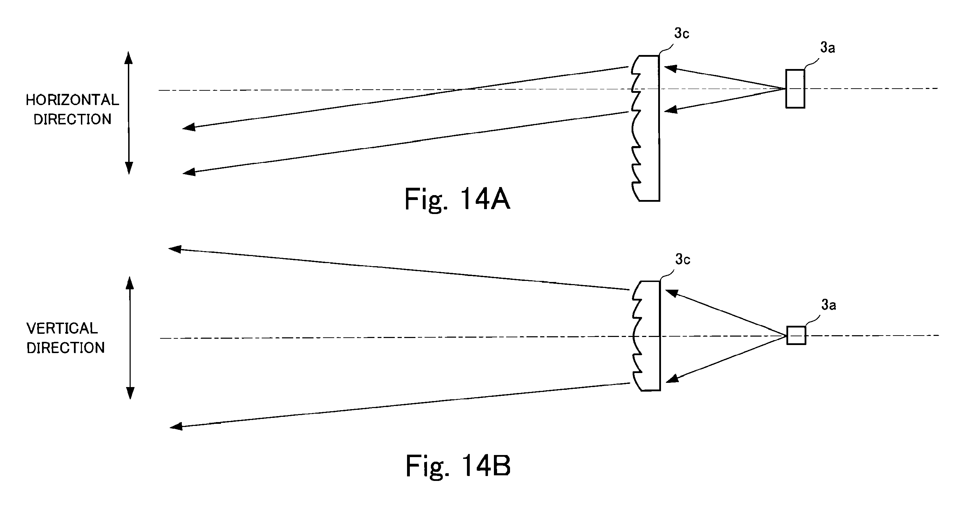

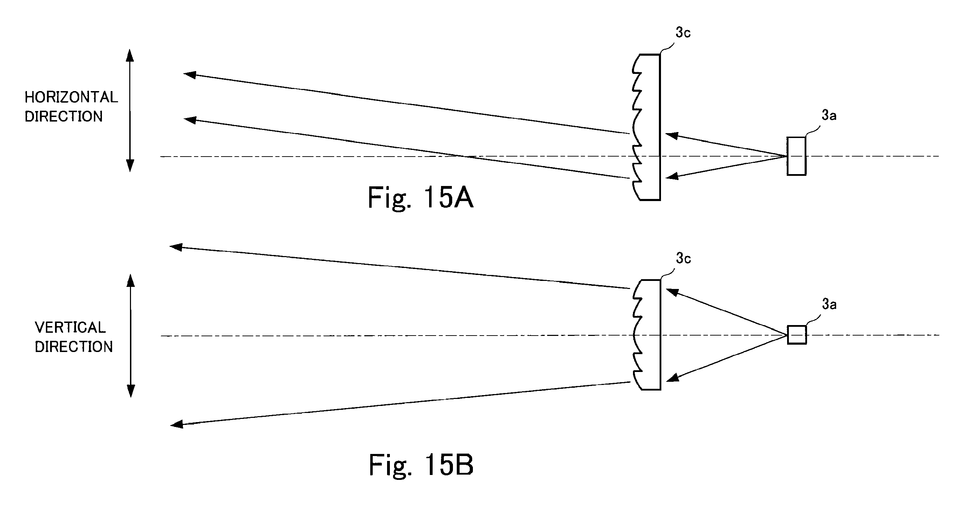

Although an embodiment has been described above wherein the vertical scan range of the laser light is changed for each of the partitions 100-110 and the vertical range irradiated by the laser light is made approximately the same within the range of distance in which objects are to be detected in that detection partition, the shape of the light projecting lens 34c may be designed as shown in Figs, 13-15 such that the spread angle of the laser light in the vertical direction increases stepwise as the position of incidence of the laser light moves away from the center of the light projecting lens 3c in the horizontal direction. Fig. 13 shows the situation where the direction of emission of the laser light is approximately to front, Fig. 14 shows the situation where it is diagonal to the left and Fig. 15 shows the situation where it is diagonal to the right. Figs. 13A, 14A and 15A show the laser light irradiation in the horizontal direction and Figs. 13B, 14B and 15B show the laser light irradiation in the vertical direction.

The spread angle of the laser light in the vertical direction increases stepwise due to the horizontal motion of the light projecting lens 3c as the direction of emission of the laser light moves away from the front in the horizontal direction. Since the shape of the light projecting lens 3c is such that the vertical range of laser light irradiation is approximately the same within the range of distance to the object to be detected within each of the partitions 100-110 shown in Fig. 11, the radar device 1 can secure a detectable distance for objects in the standard scan direction by moving the light projecting lens 3c horizontally when the frontal direction is selected as the standard scan direction and also the ability to detect objects away from the standard scan direction. Thus, the radar device 1 can sufficiently contribute to the safe traffic by the own vehicle 10 to which it is mounted. Moreover, since the structure for causing the radar device 1 to carry out a vertical scan can be dispensed with, the invention contributes to reduction in the size and the cost of the device.

By the structure described above, if the standard scan direction is not set to the frontal direction, the vertical range irradiated by the laser light cannot be made equal within the range of distance of objects to be detected within the partitions 100-110 merely by moving the light projecting lens 3c horizontally. If the structure is modified such that the laser light can be operated for a vertical scan, however, the vertical range irradiated by the laser light can be approximately equal within the range of distance of objects to be detected within the partitions 100-110 even if the standard scan direction is determined to be other than the frontal direction.

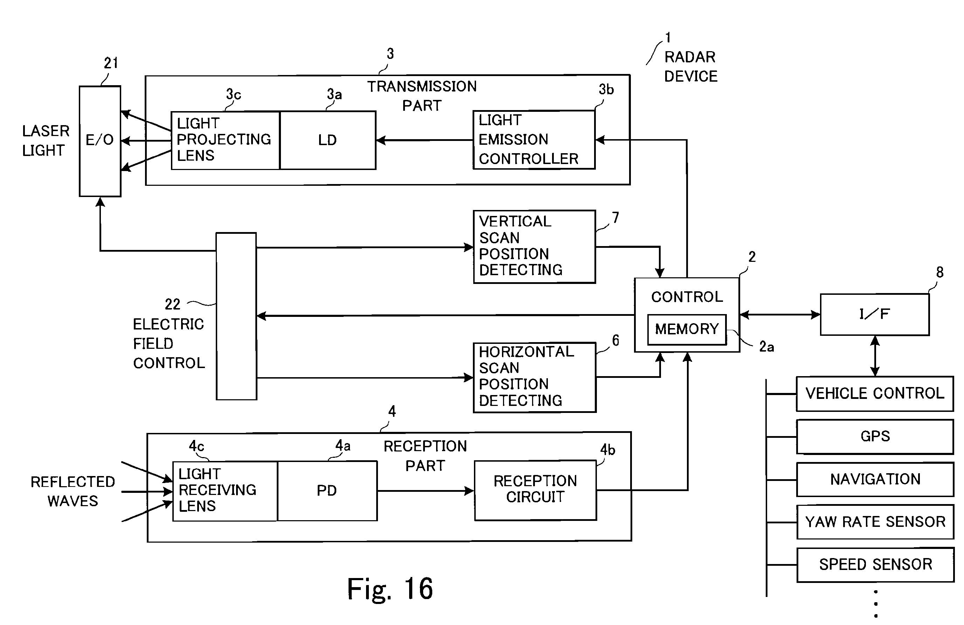

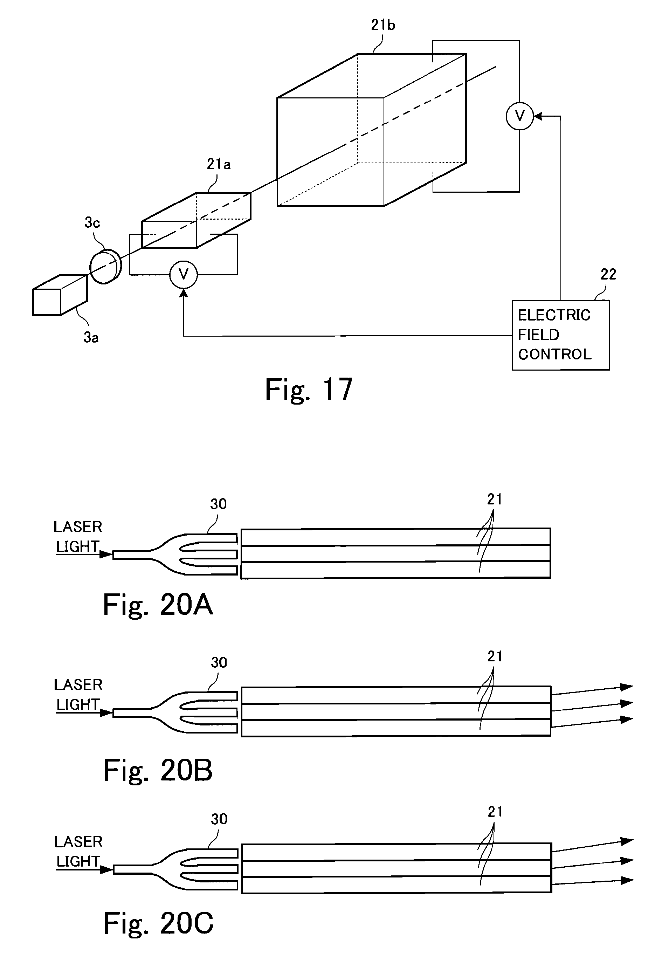

According to the embodiment described above, the light projecting lens 3c is moved for carrying out the scan by the laser light emitted from the laser diode 3a but the scan may be designed to be carried out by using an electro-optical element (E/O). Fig. 16 shows the structure of a main part of another radar device using an electro-optical element, using the same numerals for indicating the like components already described with reference to Fig. 1. As shown, this radar device 1 includes an electric field controlling part 22 for applying an electric field onto an electro-optical element 21, instead of the scanning part 5 of Fig. 1. As shown in Fig. 17, the electro-optical element 21 is disposed in front of the light projecting lens 3c such that the laser light emitted from the laser diode 3 a irradiates the detection area by passing through the light projecting lens 3c and the electro-optical element 21.

As is well known, the electro-optical element 21 has the property of changing its index of refraction according to the intensity of electric field to which it is subjected. In the case of Fig. 17, an electro-optical element 21a for changing the index of refraction in the horizontal direction and another electro-optical element 21b for changing the index of refraction in the vertical direction are placed next to each other and the laser light emitted from the laser diode 3a can be moved both horizontally and vertically for scanning. The electric field controlling part 22 serves to individually control the electric fields applied to the two electro-optical elements 21a and 21b, that is, to move the laser light horizontally by varying the electric field applied to the electro-optical element 21a and vertically by varying the electric field applied to the electro-optical element 21b. The horizontal scan position detecting part 6 detects the horizontal direction of the laser light emission from the intensity of the electric field applied by the electric field controlling part 22 to the electro-optical element 21a, and the vertical scan position detecting part 7 detects the vertical direction of the laser light emission from the intensity of the electric field applied by the electric field controlling part 22 to the electro-optical element 21b.

Thus, the radar device 1 structured as shown in Fig. 16, too, like that structured as shown in Fig. 1, can move the laser light emitted from the laser diode 3a horizontally and vertically for scanning. Thus, the detectable distance for objects in the standard scan direction can be secured and the ability to detect objects away from the standard scan direction can also be secured. In the case of this example, too, the standard scan direction may be determined based on the travel condition of the own vehicle or the shape of the road on which it is traveling.

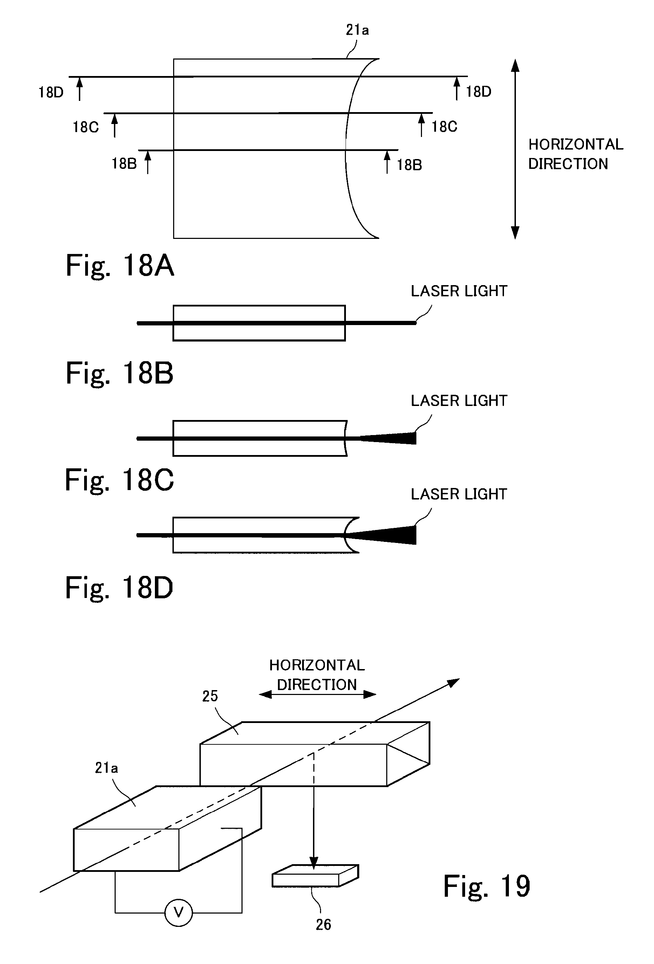

While Fig. 17 shows an example with two electro-optical elements, Fig. 18 shows another example not using the electro-optical element 21b for moving the laser light vertically but forming the laser-projecting surface of the electro-optical element 21a in such a shape as shown in Figs. 18A-18D that the spread angle of the laser light in the vertical direction becomes stepwise larger as the laser light-emitting position becomes farther away horizontally from the center of the light projecting lens 3c. Fig. 18A is the plan view of the electro-optical element 21a and Figs. 18B-18D are respectively a sectional view taken along lines 18B-18B, 18C-18C and 18D-18D.

Thus, the radar device 1 structured as described above, too, like the example wherein the light projecting lens 3c is shifted in the horizontal direction as explained with reference to Figs. 13-15, can secure the detectable distance for objects in the standard scan direction when the standard scan direction is selected to be the forward direction, and the ability to detect objects away from the standard scan direction can also be secured. If electro-optical element 21b for moving the laser light vertically is not required, the electric field controlling part 22 can be without a structure for controlling the electric field to be applied thereto such that the device can be made more compact and the production cost can be reduced.

As another embodiment of this invention, the laser-projecting surface of the electro-optical element 21a may be formed as a structure with an optical component having a microlens array, as a structure having a convex surface to converge light first and then to diffuse it, or as a non-spherical surface.

Although examples of detecting the direction of emitted laser light based on the intensity of applied electric field to the electro-optical element 21a have been described above, this may be done, as shown in Fig. 19, by means of a structure having a half mirror 25 and a light position detector (PSD) 26. The half mirror 25 is disposed in front of the electro-optical element 21. The light position sensor 26 has a plurality of light-receiving elements arranged in the horizontal direction and is disposed at a position where the laser light reflected by the half mirror would be received by one of these light-receiving elements. The horizontal scan position detecting part 6 detects the direction of emission of the laser light based on which of the light-receiving elements has received the laser light. By this method, since the direction of emission of the laser light can be detected directly, the accuracy in the detection of the position of an object can be improved.

Although an example has been shown above wherein the laser light passes through the half mirror 25 over the entire range of the horizontal scan, half mirrors may be placed only at the right-hand and left-hand end portions of the range of the horizontal scan. The intensity of the electric field applied to the electro-optical element 21a is detected only when the laser light reached either of the end portions and the relationship between the intensity of the electric field applied to the electro-optical element 21a and the direction of laser light emission is adjusted. This adjustment may be carried out when the main body of the device is started up or after a specified length of time has elapsed. This serves to control the effects of the changes in environmental conditions and the deterioration in the accuracy of detection with time.

As is well known, the intensity of applied electric field on the electro-optical element and the change in the index of its refraction are proportional to each other. Thus, the relationship between the intensity of the applied electric field and the intermediate direction of laser light emission can be adjusted by detecting the intensity of the applied electric field when the laser light has reached the right-hand and left-hand ends.

If the half mirrors 25 are placed only at the right-hand and left-hand end portions, since this means that there is no half mirror in the center portion, the loss of the laser light is reduced and the detectable length of objects is not adversely affected.

As a variation, not only half mirrors 25 are disposed at the right-hand and left-hand end portions of the range of the horizontal scan, light-receiving elements may also be disposed for detecting laser light reflected by these half mirrors 25. With such a structure, laser light may be irradiated on these half mirrors 25 at the start-up time or after a specified length of time has elapsed for correcting the relationship between the intensity of electric field applied to the electro-optical element 21a and the direction of emission of the laser light. In addition, light-receiving elements for directly receiving the laser light may be also disposed at the right-hand and left-hand end portions outside the range of the horizontal scan.

Although explanations have been presented above regarding the horizontal movement of the laser light, similar structures are also possible for the vertical movement of the laser light.

Fig. 20A shows still another structure with a plurality of electro-optical elements 21 stacked one on top of another vertically such that electric fields can be applied individually thereto and the diameter of the laser beam in the vertical direction can be varied. In the example of Fig. 20A, a light guide 30 is used to distribute laser light from a single source into each of the electro-optical elements 21 such that there will be no time delay among the electro-optical elements 21.

If the same electric field is applied to all of the electro-optical elements 21, each of them will experience the same change in the index of refraction and the light entering from the light guide 30 will be projected all in the same direction, as shown in Fig. 20B, without spreading. Although Fig. 20B shows three independent beams by three arrows, since each beam has an extension in the vertical direction, they propagate seemingly as a single beam of light. Alternatively, the light guide 30 may be designed such that the emitted laser light will have some spread.

Fig. 20C shows a situation where each of the electro-optical elements 21 experiences a different electric field, the upper ones experiencing stronger intensity such that the diameter of the beam being projected out keeps increasing as it propagates.

Although not separately illustrated, a polygonal mirror may be used instead for horizontally moving the laser light from a cylindrical lens. Use may also be made of a cylindrical lens such that the angle of vertical spread of the incident laser light is the smallest at the center in the horizontal direction, becoming larger as the horizontal distance increases from the center. If the cylindrical lens is made movable in the horizontal direction, the range of laser light irradiation in the vertical direction can be made approximately of the same size within the range of distance for detecting objects even if the standard scan direction is selected to be way from the forward direction.

## Claims

1. An object detector comprising:

   a projecting part for projecting detecting waves;
   a scanning part for horizontally moving said detecting waves projected by said projecting part;
   a receiving part for receiving reflected waves of said detecting waves from an object;
   a position detecting part for detecting the position of said object from elapsed time from when said detecting waves were projected until said reflected waves were received and the direction of projection by said scanning part;
   setting means for setting a standard scan direction for a horizontal range of scan; and
   adjusting means for increasing the vertical length irradiated by said detecting waves at positions where the distance from said projecting part is the same as the horizontal distance of the direction of projection of said detecting waves from said standard scan direction increases.

2. The object detector of claim 1 wherein said scanning part moves said detecting waves also vertically; and
   wherein said adjusting means is also for increasing the vertical range of movement of said detecting waves as the horizontal distance of the direction of projection of said detecting waves from said standard scan direction increases.

3. The object detector of claim 1 wherein said adjusting means is also for increasing the vertical angle of spread of said detecting waves as the horizontal distance of the direction of projection of said detecting waves from said standard scan direction increases.

4. The object detector of claim 2 wherein said adjusting means is also for increasing the vertical angle of spread of said detecting waves as the horizontal distance of the direction of projection of said detecting waves from said standard scan direction increases.

5. The object detector of claim 1 further comprising means for obtaining the shape of a road on which a vehicle to which the main body of said object detector is mounted;
   wherein said setting means sets said standard scan direction according to said obtained shape.

6. The object detector of claim 2 further comprising means for obtaining the shape of a road on which a vehicle to which the main body of said object detector is mounted;
   wherein said setting means sets said standard scan direction according to said obtained shape.

7. The object detector of claim 3 further comprising means for obtaining the shape of a road on which a vehicle to which the main body of said object detector is mounted;
   wherein said setting means sets said standard scan direction according to said obtained shape.

8. The object detector of claim 4 further comprising means for obtaining the shape of a road on which a vehicle to which the main body of said object detector is mounted;
   wherein said setting means sets said standard scan direction according to said obtained shape.

9. The object detector of claim 1 wherein said projecting part projects laser light as said detecting waves; and wherein said adjusting means uses an electro-optical element to adjust the vertical length irradiated by said detecting waves.

10. The object detector of claim 2 wherein said projecting part projects laser light as said detecting waves; and wherein said adjusting means uses an electro-optical element to adjust the vertical length irradiated by said detecting waves.

11. The object detector of claim 3 wherein said projecting part projects laser light as said detecting waves; and wherein said adjusting means uses an electro-optical element to adjust the vertical length irradiated by said detecting waves.

12. The object detector of claim 4 wherein said projecting part projects laser light as said detecting waves; and wherein said adjusting means uses an electro-optical element to adjust the vertical length irradiated by said detecting waves.

13. The object detector of claim 5 wherein said projecting part projects laser light as said detecting waves; and wherein said adjusting means uses an electro-optical element to adjust the vertical length irradiated by said detecting waves.

14. The object detector of claim 6 wherein said projecting part projects laser light as said detecting waves; and wherein said adjusting means uses an electro-optical element to adjust the vertical length irradiated by said detecting waves.

15. The object detector of claim 7 wherein said projecting part projects laser light as said detecting waves; and wherein said adjusting means uses an electro-optical element to adjust the vertical length irradiated by said detecting waves.

16. The object detector of claim 8 wherein said projecting part projects laser light as said detecting waves; and wherein said adjusting means uses an electro-optical element to adjust the vertical length irradiated by said detecting waves.

Fig. 1

SCAN
DIRECTION

4c    3c

4a    3a

# Fig. 2A

SCAN
DIRECTION

4c    3c

4a    3a

# Fig. 2B

HORIZONTAL
SCAN RANGE

11

9

10

Fig. 3

10   11

9

VERTICAL
SCAN
RANGE

Fig. 4

LD

PD

T1        T2    T3        T4

Fig. 5

EP 1 995 606 A1

13

Fig. 6

RANGE REACHED
BY LASER LIGHT

Fig. 8

Fig. 7A

Fig. 7B

Fig. 7C

RANGE REACHED
BY LASER LIGHT

Fig. 9

RANGE REACHED
BY LASER LIGHT

Fig. 10

Fig. 11

STANDARD
SCAN
DIRECTION

HORIZONTAL
SCAN RANGE

Fig. 12

EP 1 995 606 A1

HORIZONTAL
DIRECTION

3c

3a

Fig. 13A

VERTICAL
DIRECTION

3c

3a

Fig. 13B

HORIZONTAL
DIRECTION

3c

3a

Fig. 14A

VERTICAL
DIRECTION

3c

3a

Fig. 14B

EP 1 995 606 A1

EP 1 995 606 A1

HORIZONTAL
DIRECTION

3c

3a

## Fig. 15A

VERTICAL
DIRECTION

3c

3a

## Fig. 15B

RADAR DEVICE 1

TRANSMISSION PART 3

LIGHT PROJECTING LENS 3c
LD 3a
LIGHT EMISSION CONTROLLER 3b

LASER LIGHT
E/O 21

ELECTRIC FIELD CONTROL 22

VERTICAL SCAN POSITION DETECTING 7
HORIZONTAL SCAN POSITION DETECTING 6

CONTROL 2
MEMORY 2a

I/F 8

VEHICLE CONTROL
GPS
NAVIGATION
YAW RATE SENSOR
SPEED SENSOR
· · ·

RECEPTION PART 4
LIGHT RECEIVING LENS 4c
PD 4a
RECEPTION CIRCUIT 4b
REFLECTED WAVES

Fig. 16

## Fig. 17

## Fig. 20A

LASER LIGHT

## Fig. 20B

LASER LIGHT

## Fig. 20C

LASER LIGHT

21a

18D          18D

18C          18C

18B          18B

HORIZONTAL
DIRECTION

## Fig. 18A

LASER LIGHT

## Fig. 18B

LASER LIGHT

## Fig. 18C

LASER LIGHT

## Fig. 18D

HORIZONTAL
DIRECTION

25

21a

V

26

## Fig. 19

**European Patent Office**

**EUROPEAN SEARCH REPORT**

Application Number

EP 08 15 2393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | EP 1 835 302 A (OMRON TATEISI ELECTRONICS CO [JP]) 19 September 2007 (2007-09-19) <br> * abstract * <br> * figure 1 * <br> * paragraphs [0007] - [0009] * | 1,3,9,11 | INV. <br> G01S7/481 <br> G01S17/42 |
| A,D | US 2004/065814 A1 (MIYAZAKI HIDENORI [JP] ET AL) 8 April 2004 (2004-04-08) <br> * the whole document * | 1 | |
| A | EP 0 510 613 A (NIPPON ELECTRIC CO [JP]) 28 October 1992 (1992-10-28) <br> * figures 1,5,8 * <br> * the whole document * | 1 | |
| A | EP 1 703 299 A (OMRON TATEISI ELECTRONICS CO [JP]) 20 September 2006 (2006-09-20) <br> * paragraphs [0013] - [0020]; figures 8-11 * | 1 | |

TECHNICAL FIELDS SEARCHED (IPC)

G01S

The present search report has been drawn up for all claims

| Place of search | Date of completion of the search | Examiner |
|---|---|---|
| Munich | 30 July 2008 | Kern, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 2393

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2008

| Patent document cited in search report | | Publication date | Patent family member(s) | | Publication date |
|---|---|---|---|---|---|
| EP 1835302 | A | 19-09-2007 | JP | 2007248225 A | 27-09-2007 |
| | | | US | 2007216878 A1 | 20-09-2007 |
| US 2004065814 | A1 | 08-04-2004 | JP | 2004125739 A | 22-04-2004 |
| EP 0510613 | A | 28-10-1992 | DE | 69204886 D1 | 26-10-1995 |
| | | | DE | 69204886 T2 | 04-04-1996 |
| | | | US | 5225882 A | 06-07-1993 |
| EP 1703299 | A | 20-09-2006 | CN | 1834578 A | 20-09-2006 |
| | | | JP | 2006258497 A | 28-09-2006 |
| | | | US | 2006210113 A1 | 21-09-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP TOKKAI200075030 B
- JP TOKKAI1172554 B
- JP TOKKAI2004125739 B